**Europäisches Patentamt**

**European Patent Office**

**Office européen des brevets**

(19)

(11) Veröffentlichungsnummer: **0 271 764 B1**

(12)

# EUROPÄISCHE PATENTSCHRIFT

(45) Veröffentlichungstag der Patentschrift: **21.11.91**

(51) Int. Cl.5: **G01N 27/28**

(21) Anmeldenummer: **87117781.2**

(22) Anmeldetag: **02.12.87**

(54) **Halterung für Elektroden in der analytischen Chemie.**

(30) Priorität: **17.12.86 DE 3643036**

(43) Veröffentlichungstag der Anmeldung:
**22.06.88 Patentblatt 88/25**

(45) Bekanntmachung des Hinweises auf die
Patenterteilung:
**21.11.91 Patentblatt 91/47**

(84) Benannte Vertragsstaaten:
**AT BE CH DE ES FR GB GR IT LI LU NL SE**

(56) Entgegenhaltungen:
**WO-A-86/07151**
**DE-A- 3 118 771**
**DE-U- 8 533 354**

(73) Patentinhaber: **Conducta Gesellschaft für
Mess- und Regeltechnik mbH & Co.
Dieselstrasse 24
W-7016 Gerlingen b. Stuttgart(DE)**

(72) Erfinder: **Stellmacher, Klaus
Eichertstrasse 44
W-7260 Calw(DE)**

(74) Vertreter: **Otte, Peter, Dipl.-Ing.
Tiroler Strasse 15
W-7250 Leonberg(DE)**

## Beschreibung

Stand der Technik

Die Erfindung geht aus von einer Halterung für Elektroden in der analytischen Chemie, insbesondere pH-Elektrode nach der Gattung des Hauptanspruchs.

In der analytischen Chemie ist die Kalibrierung oder Eichung von chemischen Sensoren für die Analysen-Meßtechnik häufig umständlich und aufwendig, aber üblicherweise unverzichtbar, weil etwa für Wasser und für Gase eingesetzte Sensoren den ihnen innewohnenden, nicht behebbaren Nachteil haben, nur eine begrenzte Stabilität aufzuweisen. Solche Sensoren können beispielsweise dazu bestimmt sein, eine chemische Information (Konzentration der $H^+$-Ionen in Wasser) in eine elektrische Information umzuwandeln; es handelt sich hier um analoge Vorgänge, die zudem stark von anderen Einflußgrößen, beispielsweise Umgebungsparameter wie Temperatur, Druck oder auch chemischen Reaktionen abhängen. Hierin liegen die praktisch nicht überwindbaren Ursachen der Instabilität solcher chemischer Sensoren oder Elektroden. Diese Instabilität, die beispielsweise eine Veränderung der Nullpunktlage (Zero-Drift) oder eine Steilheitsverlagerung (Slope-Derivation) sein kann und die, was meistens der Fall ist, durch beide hervorgerufen wird, muß entsprechend korrigiert werden, der Sensor daher in möglichst vorgegebenen Abständen entsprechenden Eichungsmaßnahmen unterworfen werden.

Um beispielsweise eine pH-Elektrode eichen zu können, muß diese mit einem Eichmedium in Kontakt gebracht werden, normalerweise bestimmte Pufferlösungen. Ferner ergibt sich häufig der Fall, daß in bestimmten Meßmedien eingesetzte Elektroden verschmutzen oder einer sonstigen Änderung unterworfen sind, so daß es erforderlich ist, vor der Eichung zunächst die Elektrode entsprechend zu reinigen, jedenfalls von dem an ihr noch anhaftenden Meßmedium zu befreien.

Bekannt ist in diesem Zusammenhang eine Wechselarmatur bei einer Elektrodenhaterung, bei der eine verfahrbare Elektrode so gelagert ist, daß unter Inkaufnahme eines komplizierten Ablaufs eine Elektrode in der Halterung zurückgezogen wird, oder indem der Halterungsbereich durch ein zusätzliches Ventil verschlossen wird, so daß sich schließlich ein abgedichteter Eichraum bildet, in welchem entsprechende Reinigungs- und Kalibriermaßnahmen (Zuführung von Pufferlösung) vorgenommen werden können. Nachteilig ist hier, daß sich beim Übergang zum abgedichteten Eichraum offene Ein- und Ausgänge ergeben; es ist bei der bekannten Elektrodenhalterung auch nicht möglich, den Eichraum zu fluten oder zwischen den Messungen mit einem unter Druck stehenden Gas, üblicherweise Preßluft zu beaufschlagen, also unter Bildung einer Luftblase freizublasen. Darüber hinaus bedeuten mehrere bewegliche Teile einen höheren Dichtungsaufwand.

Weitere Elektrodenhalterungen sind auch aus der WO-8 607 151 und der DE-U-8 533 354 bekannt.

Der Erfindung liegt daher die Aufgabe zugrunde, eine Elektrodenhalterung der eingangs genannten Art so zu verbessern, daß bei Verringerung des strukturellen sowie funktionellen Aufwands eine auch durch automatischen Ablauf durchzuführende Elektrodeneichung und -reinigung durchgeführt werden kann, ohne daß die Elektrode hierzu bewegt werden muß.

Vorteile der Erfindung

Die Erfindung löst diese Aufgabe mit den kennzeichnenden Merkmalen des Hauptanspruchs und hat den Vorteil, daß durch die Zwangssteuerung über die gleitverschiebliche Hülse und die Zuordnung der jeweils in den sich bildenden Eichraum einmündenden Kanäle beim Übergang jeweils von der Betriebsstellung in die Eichposition und umgekehrt der Eichraum durch das Zuführen von Preßluft (zunächst) geflutet und hierdurch Meßmedium und/oder die für die Eichung verwendeten Pufferlösungen I und II entfernt werden; wobei ferner von besonderem Vorteil ist, daß durch im Steuerkopf vorhandene Umschaltmöglichkeiten jeweilige Ventilbereiche oder im Steuerkopf vorhandene Anschlußnippel mit dem Eichraum verbindende Kanäle zunächst als Einlaßkanäle für bestimmte Medien, beispielsweise Preßluft, fungieren, anschließend aber als Auslaßkanäle für andere Medien eingesetzt werden können, oder umgekehrt. Daher ergibt sich bei entscheidend vereinfachtem Aufbau eine bessere Wirksamkeit der ganzen Halterung, wobei beispielsweise in der Betriebsposition alle Öffnungen inklusive des Elektrodenhohlraums mit Preßluft beaufschlagt sind, so daß höchstens, über die jeweilige Dichtung, etwas Preßluft nach außen lecken kann, jedoch das Meßmedium im wesentlichen von den Dichtungen freigehalten werden kann.

Die Eichung findet dabei, da die Elektrode mit ihrer Eichschleuse im Meßmedium verbeibt, unter Betriebstemperaturbedingungen statt. (Keine unterschiedlichen Temperaturgradienten, die zu Eichfehlern führen).

Vorteilhaft ist ferner, daß der Steuerkopf über sämtliche Anschlüsse verfügt, die für die Behandlung der Elektrode, also Eichung nach Nullpunkt und Steigung, Reinigung, Preßluftbeaufschlagung u.dgl. erforderlich sind, wobei zusätzliche elektrische Anschlüsse für die entsprechenden, im gesteuerten Ablauf vorzunehmenden Umschaltungen angesteuert werden können, beispielsweise von einer entfernten Zentrale.

Eine alternative Ausgestaltung in diesem Bereich verzichtet auf elektrische Anschlüsse zum Steuerkopf vollständig und führt diesem die jeweiligen Behandlungsmedien (Preßluft; Wasser/Reinigungsmittel; Pufferlösung I; Pufferlösung II) über entsprechende Anschlüsse zu, wobei für den Arbeitsablauf im Übergang zu den verschiedenen Stellungen der Elektrode (Betriebsstellung, Eichstellung) mehrere hydraulische oder pneumatische Steueranschlüsse (vorzugsweise Preßluftanschlüsse) vorgesehen sein können.

Durch die in den Unteransprüchen aufgeführten Maßnahmen sind vorteilhafte Weiterbildungen und Verbesserungen der im Hauptanspruch angegebenen Elektrodenhalterung möglich. Besonders vorteilhaft ist hierbei, daß beim Herabfahren der Hülse im Übergang von der Betriebsstellung zur Eichstellung unter Bildung des Eichraums zunächst ein in diesem Fall ebenfalls zunächst als Preßluftzufuhrkanal arbeitender Kanal mit seiner Einmündung freikommt, so daß noch vor Abschluß des Eichraums das Meßmedium, also die in der Betriebsstellung zu untersuchende Flüssigkeit, ausgetrieben wird. Nach Schließen des Eichraums ergibt sich dann durch die Zwangssteuerung der Hülse durch das Überfahren von Steuerkanten auch die Öffnung eines zweiten Zufuhrkanals und durch entsprechende Ansteuerung von im Steuerkopf vorhandenen Umschaltventilen (erstes Wegeventil und zweites Wegeventil und Überführen des jeweiligen Ventilschiebers in eine Zweitposition) kann dann auf den Eichbetrieb übergegangen werden.

Zeichnung

Ein Ausführungsbeispiel der Erfindung ist in der Zeichnung dargestellt und wird in der nachfolgenden Beschreibung näher erläutert. Es zeigen:

Fig. 1    in einer Längsschnittdarstellung eine Ausführungsform der erfindungsgemäßen Halterung für Elektroden (in der Eichstellung) und

Fig. 2    eine Draufsicht auf den Steuerkopf der Elektrodenhalterung der Fig. 1, wobei ein bevorzugtes Ausführungsbeispiel der Ventilanordnung und -ausbildung sichtbar gemacht ist.

Beschreibung der Ausführungsbeispiele

Der Grundgedanke vorliegender Erfindung besteht darin, um die in der Halterung feststehend angeordnete, beispielsweise eingeschraubte Elektrode eine gleitverschieblich ausgebildete Hülse so anzuordnen, daß diese selbst mit einem Teilbereich als jeweils unterschiedlich beaufschlagter Ringkolben zu ihrer Verschiebung arbeitet und gleichzeitg mit einem anderen Teil hierdurch einen Eichraum um den unteren Elektrodenbereich (Elektrodenspitze) durch Abdichtung mit anderen stationären Teilen bildet und ferner hierdurch gleichzeitig durch Aufsteuerung von Zufuhrkanälen, dann in Verbindung mit den Steuerventilen im Steuerkopf, die entsprechende Beaufschlagung des jetzt gegenüber dem Meßmedium abgedichteten, entleerten Eichraums mit den jeweiligen Lösungen und Medien für die Eichung ermöglichen.

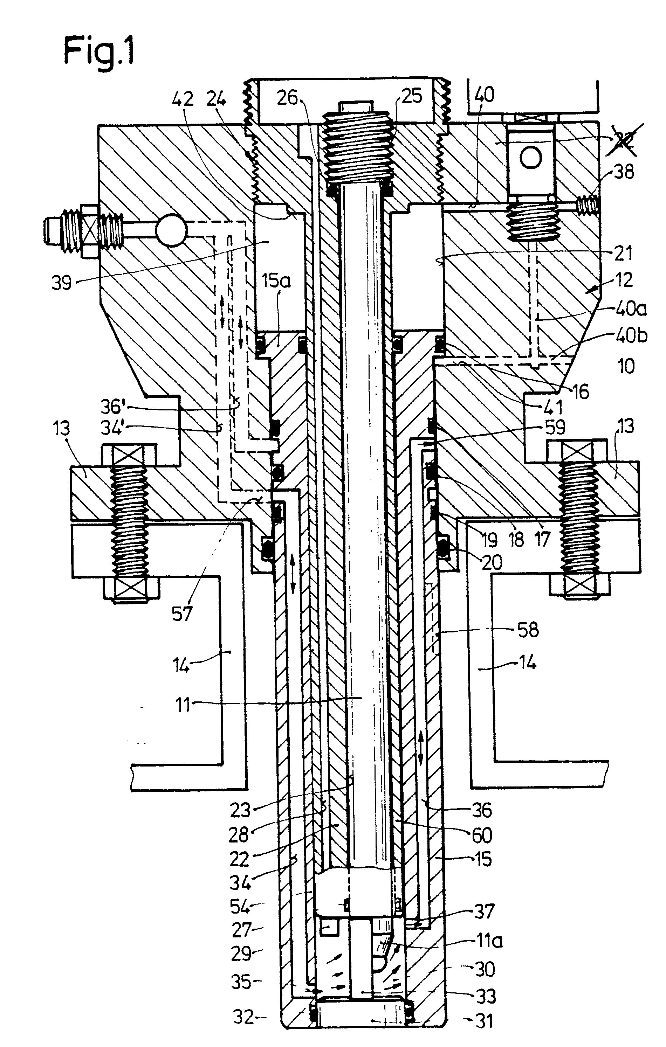

In Fig. 1 ist die Elektrodenhalterung mit 10, die Elektrode mit 11 und ihre in den durch Hülsenverschiebung gebildeten Eichraum ragende Spitze mit 11a bezeichnet.

Die Elektrodenhalterung 10 besteht aus einem ein- oder mehrstückigen Grundkörper 12, gegebenenfalls mit Befestigungsflanschen 13, um die ganze Halterung an geeigneten Trägerteilen 14 im Bereich des Meßmediums zu befestigen, in welches jedenfalls die Elektrodenspitze 11a eintaucht, wenn sich die Hülse 15 in ihrer in der Zeichnung der Fig. 1 nicht dargestellten, nach oben zurückgezogenen Position befindet.

Diese Hülse 15 ist ein länglicher Hohlzylinder, der mehrfach abgedichtet - Dichtungen 16, 17, 18, 19 und 20 - in einer, gegebenenfalls abgetreppten Gleitführung 21, gebildet von einer Innenbohrung im Grundkörper 12 in der Zeichenebene nach oben und unten verschieblich gelagert und geführt ist.

Der Grundkörper 12 umgibt daher unter Bildung der Gleitführung die Hülse 15, durchsetzt aber mit einem Elektrodenträger 22 das Hülseninnere, wobei sich dann in einer weiteren Innenbohrung 23 des Elektrodenträgers die eigentliche Elektrode 11 befindet.

Man erkennt bei 24, daß der Elektrodenträger 22 dann oben in die zentrale Aufnahmeöffnung des Grundkörpers 12 eingeschraubt, jedenfalls in diesem gehalten ist, wobei die Elektrode 11 dann wiederum in dem Elektrodenträger 22, wie bei 25 erkennbar, eingeschraubt ist. Der Elektrodenhohlraum, also der Raum zwischen dem Elektrodenträger innen und der Elektrode ist über weitere Dichtungen 26 und 27 abgedichtet.

Die Bohrung im Elektrodenträger 22 zur Aufnahme der Elektrode 11 muß nicht unbedingt zentral sein; bei dem dargestellten Ausführungsbeispiel ist sie seitlich etwas versetzt, so daß noch eine kleine parallele Zusatzbohrung 28 möglich ist, durch welche sich ein Temperaturfühler 29 bis zum Meßbereich angrenzend zur Elektrodenspitze 11a erstrecken kann.

Die Hülse 15, die auch als Steuerhülse bezeichnet werden kann, ist in der in Fig. 1 dargestellten Position nach unten bis in die Verschlußstellung des in diesem Fall dann gebildeten und gegenüber dem Meßmedium abgedichteten Eichraums 30 gefahren. Dieser Eichraum ist dadurch gebildet, daß beim Einfahren in die Endposition nach unten die Steuerhülse 15 einen stationären Dichtteller 31 erreicht und den nunmehr gegenüber dem umgebenden Meßmedium abgeschlossenen Eichraum 30 über eine Dichtung 32 abdichtet. Der Dichtteller 31 ist in geeigneter Weise stationär gehalten, bei dem dargestellten Ausführungsbeispiel vereinfacht über einen Trägerarm 33, der beispielsweise am zentralen Einsatz des Elektrodenträgers 22 befestigt sein kann.

Die Steuerhülse verfügt über Durchlässe oder Kanäle, und zwar einen ersten Längskanal 34, der über einen kurzen Querkanal bei 35 in den Eichraum 30 einmündet; diese Einmündung 35 ist aus weiter unten noch zu erläuternden Gründen soweit nach unten gelegt, daß beim anfänglichen Abwärtsfahren die Einmündung 35 möglichstgleich aufgesteuert wird, und zwar noch bevor der Eichraum 30 durch Erreichen des Dichttellers 31 verschlossen wird. Ein weiterer Längskanal 36 mündet höhenversetzt bei 37 über einen kurzen Querkanal, der auch schräg verlaufen kann, in den Eichraum 30 ein. Diese Einmündung ist, jeweils bezogen auf die Verschiebeebene der Steuerhülse 15 so hoch angesetzt, daß bei verschlossenem Eichraum die Einmündung 37 aus der Überdeckung mit dem Elektrodenträger 22 hinreichend freigekommen ist.

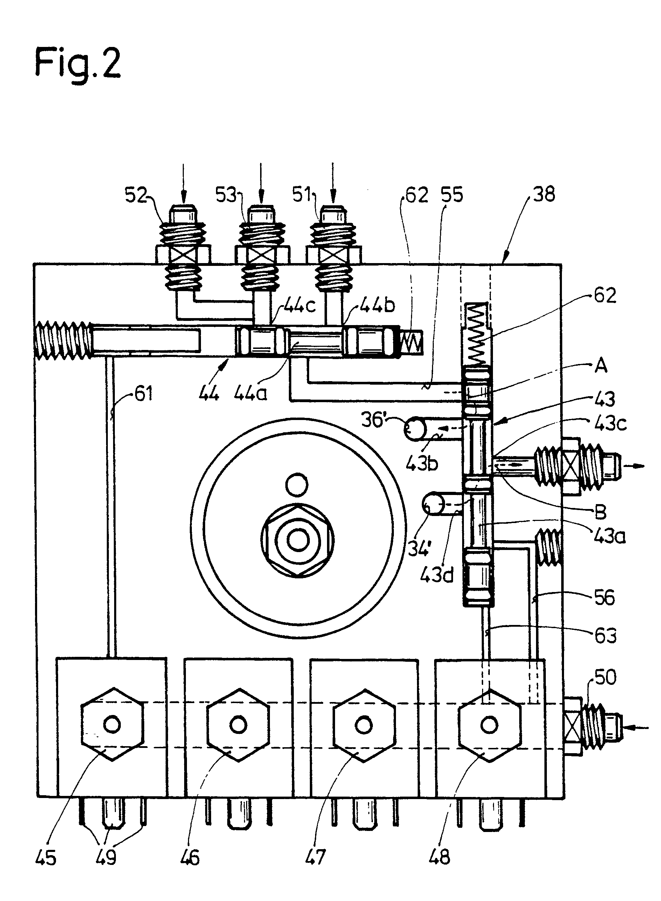

Die beiden Kanäle 34 und 36 in der Steuerhülse gehen im oberen Bereich des Grundkörpers der Elektrodenhalterung in an stationärer Stelle, also an einer vorgegebenen Position jeweils mit ihnen kommunizierende stationäre Gehäusekanäle 34', 36' über, beispielsweise durch Ringnuten. Die Gehäusekanäle 34' und 36' sind in der Zeichnung der Fig. 1 gestrichelt angedeutet, zum besseren Verständnis, daß der Schnittverlauf der Zeichnung anders ist. Um die Weiterführung der Gehäusekanäle 34', 36' besser zu verstehen, wird sofort auf die Darstellung der Fig. 2 verwiesen, wo im Bereich des Steuerkopfs 38, gebildet vom oberen Teil des Grundkörpers 12 die Einmündungen und Verbindungen dieser kanäle mit einem zugehörigen Ventil gezeigt sind, worauf weiter unten noch eingegangen wird.

Man erkennt, daß die Gehäusekanäle 34', 36' nur in der in der Zeichnung der Fig. 1 dargestellten, herabgefahrenen, hierdurch den Eichraum 30 bildenden Position der Steuerhülse 15 mit den zugeordneten Hülsenkanälen 34 und 36 kommunizieren - in dieser Position sind daher diese Kanäle zur Aufnahme und Weiterführung der jeweiligen, den Eichraum zuzuführenden Medien freigegeben und angeschlossen.

Die eigentliche Verschiebebewegung der Steuerhülse 15 erfolgt mit Hilfe des bei dem dargestellten Ausführungsbeispiel erweiterten Kopfteils 15a der Steuerhülse 15, der als Ringkolben wirkt und zusammen mit stationären Teilen, nämlich der Ringwandung der Bohrung 21 und dem abschlußbuchsenförmigen Schraubteil des Elektrodenträgers 22 einen Arbeitsraum 39 begrenzt. Diesem Arbeitsraum 39 wird über zwei, jeweils endseitig einmündende Kanäle 40 und 41 gesteuert ein Druckmittel zugeführt, so daß die Steuerhülse 15 entweder in die in der Zeichnung dargestellte untere Position (Eichstellung mit geschlossenem Eichraum 30) überführt ist oder sich in der nach oben zurückgezogenen, auf Anschlag an einem Ringvorsprung 42 am Elektrodenträger anliegenden Position befindet (Betriebsstellung bei dem Meßmedium ausgesetzter Elektrodenspitze 11a).

Der Aufbau der Elektrodenhalterung, auf die zunächst eingegangen wird, vervollständigt sich durch die in Fig. 2 noch erkennbaren Komponenten, nämlich einem ersten Steuerventil 43 und einem zweiten Steuerventil 44, die der Beaufschlagung der hülseninternen Kanäle 34 und 36 mit den entsprechenden Medien und Lösungen dienen.

Eine erste Ausführungsform der Erfindung umfaßt dann bei dem in Fig. 2 gezeigten Ausführungsbeispiel eine vorgegebene Anzahl von Magnetventilen 45, 46, 47 und 48, die einmal der Beaufschlagung des Kolben-Zylinderaggregatteils 15a/39 für die Gleitverschiebung der Steuerhülse 15 und zum anderen der Beaufschlagung der Steuerventile 43 und 44 jeweils mit dem vorgesehenen Druckmittel, üblicherweise Preßluft, dienen.

Es versteht sich und wird an dieser Stelle schon erwähnt, daß anstelle der durch elektrische Ansteuerung jeweils geschalteten Magnetventile 45, 46, 47 und 48 (deren elektrische Kontaktanschlüsse sind bei 49 dargestellt) auch lediglich übliche Anschlußnippel vorgesehen sein können, mit denen gesteuert die erforderliche Preßluft von anderer, entfernter Stelle über entsprechende Schlauchleitungen zugeführt wird. Dies liegt im Ermessen des Fachmanns; der grundsätzliche Aufbau ist jedenfalls so getroffen, daß in Verbindung mit den Steuerventilen 43 und 44 der durch Herabfahren der Steuerhülse 15 gebildete Eichraum mit Preßluft (zugeführt am Eingangsanschluß 50 des Steuerkopfs), mit Wasser/Reinigungsmittel (zugeführt am Eingangsanschluß 51), mit Pufferlösung I (zugeführt am Eingangsanschluß 52) oder mit Pufferlösung II (zugeführt am Eingangsanschluß 53) beaufschlagt werden kann.

Die beiden Steuerventile 43 und 44 sind in der Zeichnung als Schiebeventile dargestellt, und zwar speziell als hier pneumatisch angesteuerte, also in der Bewegung des Steuerschiebers durch Preßluft beaufschlagte 3/2-Wegeventil (Steuerventil 44) bzw. 5/2-Wegeventil (Steuerventil 43), also Ventile mit drei oder fünf Anschlüssen und zwei Schaltstellungen.

Es versteht sich, daß hier jede beliebige Art von Ventilen vorgesehen sein kann, auch jeweils separat über elektrische Signale angesteuerte 2/2-Wegeventile; für die gewünschten Funktionen erweisen sich jedoch die in der Fig. 3 gezeigten Ventile als besonders günstig.

Der weitere Aufbau der Elektrodenhalterung sowie der speziellen Anschlüsse und Beaufschlagung der jeweiligen Steuerventile wird im folgenden anhand der Erläuterung der Wirkungsweise beschrieben.

Dargestellt ist die Armatur der Elektrodenhalterung in der Servicestellung mit abgedichtetem Eichraum 50, die Grundposition der Armatur in der Betriebsstellung ist gebildet durch die nach oben auf Anschlag gefahrene Steuerhülse 15, wodurch die Elektrodenspitze 11a frei mit dem Meßmedium in Kontakt kommt und die Dichtung 32 (unterste Hülsendichtung) in der durch das Bezugszeichen 54 in Fig. 1 angedeuteten Höhe abdichtend an der Unterkante des Elektrodenträgers 22 anliegt. Dies ist die Stellung, in der sich auch die Ventilschieber 43a des Steuerventils 43 und 44a des Steuerventils 44 befinden. Bei dieser Position ist der vom Steuerventil 44 (siehe Fig. 2) herrührende Zulauf 55 zum Steuerventil 43 durch die Stellung von dessen Steuerschieber 43a abgeschlossen und ein interner Preßluftzufuhrkanal 56 ist zum in diesem Falle den Einlaß bildenden Kanal 34' offen. Zwar kommuniziert in dieser Position der weiterführende Kanal 34 in der Steuerhülse 15 nicht mit dem stationären Einmündungsringbereich 57 des Kanals 34', die an dieser Stelle anliegende Preßluft steht jedoch an allen Dichtungen an, überwindet diese teilweise und gelangt insbesondere auch in den (Einlaß)-Kanal 34; hierzu können für sich gesehen bekannte Mittel vorgesehen sein, beispielsweise Einlecken oder Überströmen durch Ringnuten u.dgl. Eine Möglichkeit ist als äußerer Ringnutausschnitt 58 der Steuerhülse 15 in Fig. 1 gestrichelt gezeigt; genauso gut kann es sich hier um innere Ringnutausschnitte in der Gleitführung des Grundkörpers 12 handeln.

Um sicherzustellen, daß in der Betriebsstellung bei hochgezogener Steuerhülse 15 tatsächlich in und an allen Hohlräumen sowie an allen Dichtungen nach außen Preßluft von innen ansteht, können bestimmte in der Fig. 1 gezeigten Dichtungen auch wegfallen, beispielsweise die Ringdichtung 19; außerdem kann der Ringablauf 59 zum inneren Kanal 36' höher gelegt sein. Hierdurch gelangt die Preßluft vom Austritt 35 des Kanals 34 auch in den Gleitführungsringraum zwischen dem Elektrodenträger 22 und der diesen umgebenden Steuerhülse 15 sowie, und auch dies ist ein besonderes Merkmal vorliegender Erfindung, über einen zusätzlichen, nach innen gerichteten Querkanal 60 im unteren Teil des Elektrodenträgers 22 auch in den Elektrodenraum, also in den schmalen Ringraum, der zwischen der Elektrode 11 und ihrem Elektrodenträger 22 gebildet und durch Dichtungen oben und unten auch abgedichtet ist. Auch an diesen Dichtungen steht daher die Preßluft an, wobei hier auch ein Preßluft-Auslaß gebildet ist durch den zweiten Kanal 36 über den Gehäusekanal 36' zum Anschluß 43b des Steuerventils 43 und von diesem zum Auslaßanschluß 43c bei der in Fig. 2 gezeigten Ventilschieberstellung.

Erfolgt jetzt Übergang in die Servicestellung, dann wird zunächst eines der beiden Magnetventile 46 oder 47 betätigt und entsprechend gelangt das Druckmittel (Preßluft) in diesem Fall über die interne Verbindungsleitung 40 in den Kopfbereich des Ringkolbens 15a, übt Druck auf diesen aus und treibt die Steuerhülse 15 aus der oberen Position in die in Fig. 1 dargestellte untere Abdichtposition, in welcher bei Erreichen der Endstellung der abgedichtete Eichraum 30 gebildet ist.

Schon beim Übergang, also beim Eintritt der Kanalmündung 35 in den zunächst unten noch offenen Eichraum 30 tritt Preßluft in diesen ein, bildet eine Luftblase und treibt das Meßmedium aus, so daß bei endgültigem Erreichen der unteren Position kein Meßmedium mehr im Eichraum 30 vorhanden ist.

In der jetzt erreichten unteren Position der Steuerhülse 15 ist dann auch die Einmündung 37 des anderen Kanals 36 freigekommen und es erfolgt nunmehr die Umschaltung des Steuerventils 43 in die andere Schieberposition, in welcher sich dann die durch die gestrichelten Pfeile A und B markierten Wege eröffnen, in der anderen Steuerschieberposition. Der bisherige Preßluft-Einlaßanschluß 43d wird mit Bezug auf die Eich- und Reinigungsfunktion zum Auslaßanschluß und mit dem Ventilanschluß 43c zum Ausgang durchverbunden, während der interne Zulaufkanal 55 vom Steuerventil 44 mit dem bisherigen Preßluft-Auslaßanschluß 43b verbunden ist, der nunmehr Einlaßanschluß für die Medien wird, die an den Einlaßanschlüssen 51, 52 und 53 des Steuerkopfs der Armatur, vorzugsweise über Rückschlagventile, anstehen.

Je nach Ansteuerung des Steuerventils 44 gelangt daher zunächst vom Anschluß 44b des Steuerventils 44 Wasser/Reinigungsmittel (in der gezeigten Stellung des Steuerschiebers 44a) über die Kanäle 36', 36 in den abgeschlossenen Eichraum 30 und aus diesem über die Kanäle 34, 34' zum Ventilanschluß 43d des Steuerventils 43 und über die dann umgeschaltete Steuerventilposition zum Ausgangsanschluß des Steuerkopfes. Diese umgeschaltete Position des Steuerventils 43 bleibt erhalten, auch wenn anschließend der Steuerschieber 44a des Steuerventils 44 in seine andere Umschaltposition fährt durch entsprechende Ansteuerung hier des Magnetventils 45, welches den Steuerschieber 44a über eine Preßluftleitung 61 beaufschlagt. Man kann dann über den Ventilanschluß 44c entweder Pufferlösung I oder Pufferlösung II für die Eichung zuführen, die Eichung vornehmen und anschließend wieder durch Umschaltung des Ventils 44 mit Wasser/Reinigungsmittel nachspülen, wobei in diesem Falle stets die Kanäle 36′, 36 die Einlaß- und die Kanäle 34′, 34 die Auslaßkanäle sind.

Anschließend kann gleichzeitig mit dem Steuerbefehl an eines der Ventile 46 und 47 zur Beaufschlagung des Ringkolben-Zylinderaggregats 15a/21/22 zum Hochfahren der Steuerhülse 15 oder nachlaufend das Steuerventil 43 umgeschaltet werden, so daß die Kanäle 34′, 34 wieder Einlaßkanäle für die anstehende Preßluft werden. Der Zyklus wiederhlt sich dann.

Es versteht sich und sei hier nochmals erwähnt, daß die Erfindung nicht auf die dargestellten Ausführungsformen beschränkt ist, weder in der Anordnung der Dichtungen, der Ausbildung der Steuerventile sowie der diese und das Zylinder-Kolbenaggregat wiederum ansteuernden Magnetventile. Die dargestellte Ausführungsform stellt allerdings ein besonders bevorzugtes Ausführungsbeispiel dar, welches kostengünstig und bei unkompliziertem Aufbau eine einwandfreie Behandlung von Elektroden in der analytischen Chemie, insbesondere Eichungs-, und/oder Reinigungsund/oder Sterilisationsschritte ermöglicht.

Eine vorteilhafte Ausgestaltung vorliegender Erfindung besteht beispielsweise darin, daß man auf die Anordnung von Rückstellfedern 62, wie sie in Fig. 2 für die Steuerschieber 43a, 44a gezeigt sind, verzichtet und den zu den Eingangssteuerleitungen 61 und 62 abgewandten Seiten der Steuerschieber ebenfalls Druckluft zuführt; durch unterschiedliche Kolbenflächen ergibt sich hierbei ein bistabiles Verhalten. Hierdurch ist die Funktion der Steuerventile 43, 44 gesichert, eine Alterung der Federn, auch durch korrosive Einflüsse von auf diese Seite gelangenden Medien braucht nicht befürchtet zu werden.

Alle in der Beschreibung, den nachfolgenden Ansprüchen und der Zeichnung dargestellten Merkmale können sowohl einzeln als auch in beliebiger Kombination miteinander erfindungswesentlich sein.

**Patentansprüche**

1. Halterung für Elektroden in der analytischen Chemie, insbesondere pH-Elektroden, mit einer Lagerung für die Elektrode sowie mit Mitteln, die durch eine Relativbewegung zwischen Elektrode und der Lagerung einen abgeschlossenen Eichraum in einer Servicestellung bilden, in welchen entsprechende Eich- und/oder Reinigungsmittel (Pufferlösungen I, II, Wasser)- und/oder Sterilisierungsmittel gesteuert einbringbar sind, gekennzeichnet durch

a) eine in der Lagerung (Grundkörper 12) relativ zu dieser und relativ zur feststehenden Elektrode (11) gleitverschieblich geführte Steuerhülse (15), die in einer unteren Endstellung den aktiven Elektrodenbereich unter Bildung des abgedichteten Eichraums (30) gegenüber dem Meßmedium abtrennt,

b) einen Steuerkopf (38) im oberen Teil der Lagerung (12), von dem in den Eichraum (30) mündende Einlaß und Auslaßkanäle (34, 34′; 36, 36′) für die Einbringung von Preßluft, Pufferlösungen (I, II) und/oder Reinigungslösungen ventilgesteuert beaufschlagt werden und c) eine Ausbildung und Anordnung der Steuerventile (43, 44) im Steuerkopf (38) sowie der Dichtungen (16, 17, 18, 19, 20, 32) und Kanäle (34, 34′; 36, 36′; 60) im Bereich der Hülsengleitlagerung und der Elektrode derart, daß in der Betriebsstellung alle Ringräume und Öffnungen unter einem von innen nach außen wirkenden Gasdruck (Preßluft) stehen.

2. Halterung nach Anspruch 1, dadurch gekennzeichnet, daß der Grundkörper (12) der Lagerung eine Bohrung (21) aufweist, die, gegebenenfalls abgetreppt, die Gleitführung für die höhenverschiebliche Steuerhülse (15) bildet und daß in die Bohrung (21) des Grundkörpers (12) ein Elektrodenträger (22) eingesetzt ist, der von einer Innenbohrung der Steuerhülse (15) aufgenommen ist.

3. Halterung nach Anspruch 1 oder 2, dadurch gekennzeichnet, daß der Elektrodenträger (22) im Bereich des Steuerkopfs (38) mit dem Grundkörper (12) der Lagerung verbunden, insbesondere verschraubt ist und an seinem unteren Endbereich, über die Spitze (11a) der Elektrode (11) hinausragend einen Dichtteller (32) lagert, der in der heruntergefahrenen Serviceposition der Steuerhülse (15) mit dieser den abgedichteten Eichraum (30) bildet.

4. Halterung nach einem der Ansprüche 1 bis 3, dadurch gekennzeichnet, daß die Ein- und Auslaßkanäle (34, 34′;36, 36′) zur Beaufschlagung des Eichraums mit unterschiedlichen Medien mindestens teilweise als Längskanäle (34, 36) innerhalb der Steuerhülse (15) verlaufend ausgebildet sind und in vorgegebenen Positionen mit ortsfesten, internen Kanälen (34′, 36′) in der Lagerung kommunizieren.

5. Halterung nach einem der Ansprüche 1 bis 4, dadurch gekennzeichnet, daß die Einmündungen (35, 37) der beiden in den Eichraum mündenden Einlaß- und Auslaßkanäle (34, 36) höhenversetzt zueinander angeordnet sind.

6. Halterung nach Anspruch 5, dadurch gekennzeichnet, daß die Einmündung des in der Betriebsstellung bei hochgefahrener Steuerhülse (15) und dem Meßmedium ausgesetzter Elektrodenspitze (11a) Preßluft mindestens über Leckstellen führenden Kanals (34) so angesetzt ist, daß schon bei anfänglichem Abwärtsfahren der Steuerhülse (15) zur Bildung des abgeschlossenen Eichraums (30) Preßluft in diesen noch vor dessen Verschluß einführbar ist zur Austreibung des Meßmediums.

7. Halterung nach einem der Ansprüche 1 bis 6, dadurch gekennzeichnet, daß die Einmündung (37) des anderen Steuerhülsen-Längskanals (36) über die als Steuerkante wirkende untere Abschlußfläche der Elektrodenhalterung (22) erst unmittelbar vor bzw. gleichzeitig mit dem Verschluß des Eichraums (30) aufgesteuert wird.

8. Halterung nach einem der Ansprüche 1 bis 7, dadurch gekennzeichnet, daß die in die auch die Gleitführung für die Steuerhülse (15) bildende Bohrung (21) des Grundkörpers (12) eingeschraubte Elektrodenhalterung (22) die vom Steuerkopf (38) aus einsetzbare und wieder entnehmbare Elektrode (11) in einer Längsbohrung (23) aufnimmt, in die die Elektrode (11) mit ihrem Elektrodenkopf eingeschraubt ist.

9. Halterung nach einem der Ansprüche 1 bis 8, dadurch gekennzeichnet, daß in den Ringraum zwischen der Elektrodenaußenwandung und der sie aufnehmenden Bohrung (23) im Elektrodenträger (22) ein Querkanal (60) einmündet, der mindestens in der Betriebsstellung durch eine direkte Verbindung mit Preßluft unter Druck führenden Kanälen oder durch Leckluft dem Elektrodenringraum Preßluft zuführt.

10. Halterung nach Anspruch 9, dadurch gekennzeichnet, daß der den Elektrodenringraum mit Preßluft in der Betriebsstellung versorgende Querkanal (60) eine Verbindung herstellt zwischen dem Elektrodenringraum und dem die Gleitführung zwischen dem Elektrodenträger (22) und der Steuerhülse (15) bildenden Ringraum, der in der Betriebsstellung über die Einmündung (35) des Hülsenlängskanals (34) mit Preßluft versorgt ist.

11. Halterung nach einem der Ansprüche 1 bis 10, dadurch gekennzeichnet, daß in der Betriebsstellung der Steuerhülse (15) Verbindungen vorgesehen sind von dem unter Preßluft stehenden gehäuseinternen Kanal (34') zu sämtlichen Ringräumen, Dichtungen und Öffnungen, gegebenenfalls auch nur als Leckluftverbindung über Dichtungen u.dgl. derart, daß ein Eindringen von Umgebungsmedien in den Halterungsbereich ausgeschlossen ist.

12. Halterung nach Anspruch 11, dadurch gekennzeichnet, daß die Verbindungen Ringausnehmungen (58) in Steuerhülse (15) und/oder in der Gleitführungsbohrung (21) des Grundkörpers (12) sind, derart, daß über diese von der Betriebsstellung ausgehend auch bei Verschiebung der Steuerhülse (15) der nach außen wirkende Preßluftdruck aufrechterhalten und in den sich bildenden Eichraum (30) zur Austreibung des Meßmediums überführt wird.

13. Halterung nach einem der Ansprüche 1 bis 12, dadurch gekennzeichnet, daß die Steuerhülse (15) mit einem oberen Kopfteil (15a) in Verbindung mit der umgebenden Gleitführung (21) des Grundkörpers (12) und der Elektrodenhalterung (22) einen ringförmigen Arbeitsraum (39) eines Kolben/Zylinderaggregats bildet, in den in der Abfolge dem Zyklus der Service- und Betriebsstellungen der Steuerhülse (15) folgend Druckmittel oberhalb bzw. unterhalb des erweiterten Ringkolbenkopfs (15a) der Steuerhülse (15) eingesetzt ist.

14. Halterung nach einem der Ansprüche 1 bis 13, dadurch gekennzeichnet, daß die im Steuerkopf (38) des Grundkörpers (12) angeordneten Steuerventile (43, 44) als 3/2-bzw. 5/2-Wegeventile mit pneumatischer oder hydraulischer Ansteuerung des jeweiligen Steuerschiebers (43a, 44a) ausgebildet sind.

15. Halterung nach Anspruch 14, dadurch gekennzeichnet, daß ein erstes 5/2-Wegeventil (43) mit den Anschlüssen der gehäuseinternen Kanäle (34', 36') verbunden ist sowie ferner mit einem Preßluftanschluß und einem Ausgangsanschluß sowie einem Zuleitungsanschluß vom zweiten Steuerventil (44), über welches je nach Position von dessen Steuerschieber (44a) die Medien Wasser/Reinigungsmittel, Pufferlösung (I) bzw. Pufferlösung (II) zur Eichung zugeführt sind.

16. Halterung nach einem der Ansprüche 1 bis 15, dadurch gekennzeichnet, daß das erste Steuerventil (43) einen gehäuseinternen Kanal (34') und von diesem durch Anschlußverbindungen oder Leckluft übergehend zu sämtlichen Ringhohlräumen, Dichtungen und Öffnungen

mit dem Preßluftanschluß in der Betriebsstellung in einer ersten Steuerschieberposition verbindet, wobei der andere gehäuseinterne Kanal (36') in Verbindung mit dem zugeordneten Steuerhülsen-Längskanal (36) mit dem Auslaßanschluß verbunden ist und daß bei Umschaltung dieses ersten Steuerventils (43) beim Übergang in die Servicestellung der ursprüngliche Einlaßanschluß und Zuführungskanal (34', 34) für die Preßluft als Auslaßkanal für die dem Eichraum zuzuführende Medien (Wasser/Reinigungsmittel, Pufferlösung I, Pufferlösung II) mit dem Ausgangsanschluß verbunden ist und die Auslaßkanäle (36, 36') für die Preßluft in der Betriebsstellung die Einlaßkanäle für die Eichraummedien in der Servicestellung sind.

**17.** Halterung nach einem der Ansprüche 1 bis 16, dadurch gekennzeichnet, daß die Steuerventile (43, 44) über Magnetventile (45, 48) in der Bewegung ihrer Steuerschieber (43a, 44a) durch Preßluftzuführung als Druckmittel gesteuert sind und daß weitere Magnetventile (46, 47) im Steuerkopf (38) angeordnet sind, die über gehäuseinterne Kanäle (40, 40a, 40b) dem Arbeitsraum (39) des auf die Position der Steuerhülse (15) einwirkenden Kolben/Zylinderaggregats Preßluft zuführen.

**18.** Halterung nach einem der Ansprüche 1 bis 17, dadurch gekennzeichnet, daß zur Rückstellung der Steuerschieber (43a, 43b) der Steuerventile (43, 44) im Steuerkopf (38) den gegenüber dem Steuerdruck abgewandten Seiten der Steuerschieber Preßluft mit konstantem Druck zugeführt ist.

## Claims

**1.** Holder for electrodes in analytical chemistry, in particular pH electrodes, having a housing for the electrode and having means forming a closed-off calibrating space in a surface position by a relative movement between electrode and the housing, and into which corresponding calibrating and/or cleaning agents (buffer solutions I, II, water) and/or sterilizing agents can be introduced in controlled manner, characterized by

a) a control socket (15) guided in the housing (base body 12) such that it may be slidably displaced relative thereto and relative to the stationary electrode (11), which control socket (15) in a lower end position separates off the active electrode region from the measurement medium, forming the sealed-off calibrating space (30),

b) a control head (38) in the upper part of the housing (12) which, controlled by a valve, acts upon inlet and outlet channels (34, 34'; 36, 36') opening into the calibrating space (30) for the introduction of pressurized air, buffer solutions (I, II) and/or cleaning solutions, and

c) a construction and arrangement of the control valves (43, 44) in the control head (38) and of the seals (16, 17, 18, 19, 20, 32) and channels (34, 34'; 36, 36'; 60) in the region of the socket slide housing and the electrode such that in the operating position all the annular spaces and openings are under gas pressure (pressurized air) acting from the inside outwards.

**2.** Holder according to Claim 1, characterized in that the base body (12) of the housing has a drilled hole (21) which where appropriate is stepped and forms the slide guide for the height-adjustable control socket (15), and in that there is inserted in the drilled hole (21) of the base body (12) an electrode carrier (22) which is received by an inner drilled hole of the control socket (15).

**3.** Holder according to Claim 1 or 2, characterized in that the electrode carrier (22) is connected, in particular screwed, in the region of the control head (38) to the base body (12) of the housing, and at its lower end region, projecting beyond the tip (11a) of the electrode (11), houses a sealing plate (32) which forms the sealed-off calibrating space (30) with the control socket (15) when it is in the lowered service position.

**4.** Holder according to one of Claims 1 to 3, characterized in that the inlet and outlet channels (34, 34'; 36, 36'), in order to act upon the calibrating space with different media, are at least partially constructed as longitudinal channels (34, 36) running inside the control socket (15), and in predetermined positions communicate with stationary, internal channels (34', 36') in the housing.

**5.** Holder according to one of Claims 1 to 4, characterized in that the openings (35, 37) of the two inlet and outlet channels (34, 36) opening into the calibrating space are arranged displaced in height with respect to one another.

6. Holder according to Claim 5, characterized in that the opening of the channel (34), in the operating position with the control socket (15) raised and the tip (11a) of the electrode contacting the measurement medium, this converging opening guiding pressurized air at least by way of leakage places, is attached in such a manner that when the control socket (15) is initially moved down to form the closed-off calibrating space (30) pressurized air can already be introduced thereinto before it is closed, in order to expel the measurement medium.

7. Holder according to one of Claims 1 to 6, characterized in that the opening (37) of the other longitudinal channel (36) of the control socket is controlled to be open by way of the lower closure surface, acting as a control edge, of the electrode holder (22) only directly before or at the same time as the calibrating space (30) is closed.

8. Holder according to one of Claims 1 to 7, characterized in that the electrode holder (22) screwed into the drilled hole (21), also forming the slide guide for the control socket (15), of the base body (12) receives the electrode (11), which may be inserted and removed again from the control head (38), in a longitudinal drilled hole (23) into which the electrode (11) is screwed by means of its electrode head.

9. Holder according to one of Claims 1 to 8, characterized in that a transverse channel (60) opens into the annular space between the electrode outer wall and the drilled hole (23) receiving it and located in the electrode carrier (22), which transverse channel (60) supplies pressurized air to the electrode annular space, at least in the operating position through a direct connection to channels guiding pressurized air under pressure or by means of leakage air.

10. Holder according to Claim 9, characterized in that the transverse channel (60) providing the electrode annular space with pressurized air in the operating position produces a connection between the electrode annular space and the annular space forming the slide guide between the electrode carrier (22) and the control socket (15), the latter annular space being provided with pressurized air in the operating position by way of the opening (35) of the socket longitudinal channel (34).

11. Holder according to one of Claims 1 to 10, characterized in that in the operating position of the control socket (15) connections are provided from the channel (34') within the housing and acted upon by pressurized air to all the annular spaces, seals and openings, where appropriate also only as a leakage air connection by way of seals and the like such that the possibility of penetration of surrounding media into the holder region is eliminated.

12. Holder according to Claim 11, characterized in that the connections are annular cutouts (58) in control socket (15) and/or in the slide guide drilled hole (21) of the base body (12), such that by way of these and starting from the operating position, even when the control socket (15) is displaced, the pressurized air pressure acting outwards is maintained and guided over into the calibrating space (30) formed, for expulsion of the measurement medium.

13. Holder according to one of Claims 1 to 12, characterized in that the control socket (15) connected to the surrounding slide guide (21) of the base body (12) and to the electrode holder (22) by means of an upper head part (15a) forms an annular working space (39) of a piston-and-cylinder unit into which working space (39) is inserted in the sequence following the cycle of service and operating positions of the control socket (15) pressure medium above or below the widened annular piston head (15a) of the control socket (15).

14. Holder according to one of Claims 1 to 13, characterized in that the control valves (43, 44) arranged in the control head (38) of the base body (12) are constructed as 3/2- or 5/2-way valves with pneumatic or hydraulic control means for the respective control slide (43a, 44a).

15. Holder according to Claim 14, characterized in that a first 5/2-way valve (43) is connected to the connection pieces of the channels (34', 36') within the housing and is further connected to a pressurized air connection piece and an outlet connection piece and a supply line connection piece from the second control valve (44), by way of which depending on the position of its control slide (44a) the media of water/cleaning agent, buffer solution (I) or buffer solution (II) are supplied for calibration.

16. Holder according to one of Claimd 1 to 15, characterized in that the first control valve (43) connects a channel (34') within the housing to the pressurized air connection piece in the operating position in a first control slide position and from this channel (34') merges by means of connection piece connections or leakage air into all the annular hollow spaces, seals and openings, the other channel (36') within the housing connected to the associated control socket longitudinal channel (36) being connected to the outlet connection piece, and in that when this first control valve (43) is switched over during the transition into the service position, the original inlet connection piece and supply channel (34',34) for the pressurized air as the outlet channel for the media (water/cleaning agent, buffer solution I, buffer solution II) to be supplied to the calibrating space is connected to the outlet connection piece and the outlet channels (36, 36') for the pressurized air in the operating position are the inlet channels for the calibrating space media in the service position.

17. Holder according to one of Claims 1 to 16, characterized in that the control valves (43, 44) are controlled by pressurized air supply as pressure medium and by way of magnetic valves (45, 48) during the movement of their control slides (43a, 44a), and in that further magnetic valves (46, 47) are arranged in the control head (38) and supply pressurized air by way of channels (40, 40a, 40b) within the housing to the working space (39) of the piston-and-cylinder unit influencing the position of the control socket (15).

18. Holder according to one of Claims 1 to 17, characterized in that in order to restore the control slides (43a, 43b) of the control valves (43, 44) in the control head (38) pressurized air at a constant pressure is supplied to the sides of the control slides remote from the control pressure.

**Revendications**

1. Support pour électrodes en chimie analytiques en particulier électrodes pour PH, avec un logement pour l'électrode, ainsi qu'avec des moyens, qui par un mouvement relatif entre électrode et le logement forment un espace d'étalonnage fermé dans une position de service, dans lequel on peut mettre en place par commande des moyens d'étalonnage et/ou de nettoyage (des solutions tampon I, II, de l'eau) et/ou des moyens de stérilisation, support caractérisé par :

   a) un manchon de commande (15) guidé en déplacement par glissement dans le logement (corps de base 12) relativement à celui-ci et relativement à l'électrode fixe (11), manchon qui sépare dans une position d'extrémité inférieure la zone d'électrode active en formant l'espace d'étalonnage (30) rendu étanche vis-à-vis du milieu à mesurer,

   b) une tête de commande (38) dans la partie supérieure du logement (12), par laquelle sont alimentés, par commande de soupape, des canaux d'amenée et de sortie (34, 34' ; 36, 36') débouchant dans l'espace d'étalonnage (30) pour l'introduction d'air comprimé, de solution tampon (I, II) et/ou de solutions de nettoyage et,

   c) une réalisation et disposition des soupapes de commande (43, 44) dans la tête de commande (38) ainsi que des garnitures d'étanchéité (16, 17, 18, 19, 20, 32) et des canaux (34, 34' ; 36, 36' ; 60) dans la zone du logement de glissement du manchon et de l'électrode telles, que dans la position de marche tous les espaces annulaires et ouvertures se trouvent sous une pression de gaz (air comprimé) agissant de l'intérieur vers l'extérieur.

2. Support selon la revendication 1, caractérisé en ce que le corps de base (12) du logement comprend un alésage (21), qui, éventuellement en degrés, constitue le guide de glissement pour le manchon de commande (15) déplaçable en hauteur et en ce que dans l'alésage (21) du corps de base (12) est inséré un support d'électrode (22) qui est reçu dans un alésage intérieur du manchon de commande (15).

3. Support selon la revendication 1 ou la revendication 2, caractérisé en ce que le support d'électrode (22) dans la zone de la tête de commande (38) est relié, en particulier vissé, avec le corps de base (12) du logement et logé dans sa zone extrême inférieure dépassant au-delà de la pointe (11a) de l'électrode (11) un disque isolant (32), qui forme dans la position de service amenée vers le bas du manchon de commande (15) avec celui-ci l'espace d'étalonnage (30) rendu étanche.

4. Support selon l'une des revendications 1 à 3, caractérisé en ce que les canaux d'amenée et de sortie (34, 34' ; 36, 36') pour alimenter l'espace d'étalonnage avec des milieux différents sont réalisés au moins partiellement en canaux longitudinaux (34, 36) se développant à l'intérieur du manchon de commande (15) et ils communiquent dans le logement dans des positions préfixées avec des canaux internes fixés (34', 36').

5. Support selon l'une des revendications 1 à 4, caractérisé en ce que les entrées (35, 37) des deux canaux d'amenée et de sortie (34, 36) dans l'espace d'étalonnage sont décalées en hauteur l'une par rapport à l'autre.

6. Support selon la revendication 5, caractérisé en ce que l'entrée du canal (34) amenant de l'air comprimé au moins par des endroits de fuite dans la position de marche avec le manchon de commande (15) relevé vers le haut et la pointe d'électrode (11a) exposée au milieu à mesurer est mis en place, de sorte que dès le début de la descente du manchon de commande (15) pour former l'espace d'étalonnage fermé (30), de l'air comprimé peut être introduit dans celui-ci encore avant sa fermeture pour expulser le milieu à mesurer.

7. Support selon l'une des revendications 1 à 6, caractérisé en ce que l'entrée (37) de l'autre canal longitudinal du manchon de commande (36) est commandée à l'ouverture par la surface de bord inférieure du support d'électrode (22), agissant comme arête de commande d'abord directement avant ou en même temps que la fermeture de l'espace d'étalonnage (30).

8. Support selon l'une des revendications 1 à 7, caractérisé en ce que le support d'électrode (22) vissé dans l'alésage (21) du corps de base (12) formant aussi le guide de glissement pour le manchon de commande (15) reçoit l'électrode (11) pouvant être insérée et à nouveau extraite depuis la tête de commande (38) dans un alésage longitudinal (23), dans lequel l'électrode (11) est vissée par sa tête d'électrode.

9. Support selon l'une des revendications 1 à 8, caractérisé en ce que dans l'espace annulaire entre la paroi extérieure de l'électrode et l'alésage (23) la recevant dans le support d'électrode (22) débouche un canal transversal (60), qui amène au moins dans la position de marche de l'air comprimé à l'espace annulaire de l'électrode par une liaison directe avec des canaux conduisant de l'air comprimé sous pression ou par de l'air de fuite.

10. Support selon la revendication 9, caractérisé en ce que le canal transversal (60) alimentant l'espace annulaire de l'électrode en air comprimé dans la position de marche établit une liaison entre l'espace annulaire de l'électrode et l'espace annulaire formant le guidage à glissement entre le support d'électrode (22) et le manchon de commande (15), espace annulaire qui est alimenté en air comprimé dans la position de marche par l'arrivée (35) du canal longitudinal du manchon (34).

11. Support selon l'une des revendications 1 à 10, caractérisé en ce que dans la position de marche du manchon de commande ( 15) sont prévues des liaisons du canal (34') intérieur au boîtier, se trouvant sous air comprimé à tous les espaces annulaires, garnitures et ouvertures, éventuellement aussi seulement en liaison d'air de fuite par des garnitures et équivalents, de sorte qu'une pénétration des milieux ambiants dans la zone du support est exclue.

12. Support selon la revendication 11, caractérisé en ce que les liaisons sont des évidements annulaires (58) dans le manchon de commande (15) et/ou dans l'alésage du guidage à glissement (21) du corps de base (12), de sorte que, par ceux-ci en sortant de la position de marche même par déplacement du manchon de commande (15) la pression d'air comprimé agissant vers l'extérieur est maintenue et est transférée dans l'espace d'étalonnage (30) se formant pour expulser le milieu à mesurer.

13. Support selon l'une des revendications 1 à 12, caractérisé en ce que le manchon de commande (15) forme avec une pièce de tête (15a) en liaison avec le guidage à glissement (21) du corps de base (12) et le support d'électrode (22) une chambre de travail (39) annulaire d'un ensemble piston/cylindre, dans laquelle est placé, en suivant dans l'ordre le cycle des positions de service et de marche du manchon de commande (15), de l'agent de pression au-dessus ou en-dessous de la tête annulaire de piston (15a) élargie du manchon de commande (15).

14. Support selon l'une des revendications 1 à 13, caractérisé en ce que les soupapes de commande (43, 44) disposées dans la tête de commande (38) du corps de base (12) sont réalisées en soupapes à 3/2 ou à 5/2 voies avec commande pneumatique ou hydraulique du tiroir de distribution (43a, 44a) correspondant.

15. Support selon la revendication 14, caractérisé en ce qu'une première soupape (43) à 5/2 voies est reliée avec les raccordements des canaux (34', 36') intérieurs aux boîtiers ainsi qu'en outre avec un raccordement d'air comprimé et un raccordement de sortie ainsi qu'un raccordement de conduite d'alimentation de la deuxième soupape de commande (44), par laquelle selon la position de son tiroir de distribution (44a) sont amenés les milieux eau/moyen de nettoyage, solution tampon (I) ou solution tampon (II) pour l'étalonnage.

16. Support selon l'une des revendications 1 à 15, caractérisé en ce que la première soupape de commande (43) relie, dans la position de marche dans une première position du tiroir de distribution, un canal (34') intérieur au boîtier et à partir de celui-ci par des jonctions de raccordement ou de l'air de fuite passant à tous les espaces annulaires creux, garnitures et ouverture, au raccordement d'air comprimé, l'autre canal (36) intérieur au boîtier en liaison avec le canal (36) longitudinal du manchon de commande associé étant connecté au raccordement de sortie et en ce que par commutation de cette première soupape de commande (43) par passage dans la position de service le raccordement d'entrée d'origine et canal d'amenée (34',34) pour l'air comprimé se trouve connecté comme canal de sortie avec le raccordement de sortie pour les milieux à amener à l'espace d'étalonnage (eau/agent de nettoyage, solution tampon I , solution tampon II) et les canaux de sortie (36, 36') pour l'air comprimé dans la position de marche sont les canaux d'amenée pour les milieux de l'espace d'étalonnage dans la position de service.

17. Support selon l'une des revendications 1 à 16, caractérisé en ce que les soupapes de commande (43, 44) sont commandées par l'intermédiaire d'électrovannes (45, 48) dans le déplacement de leur tiroir de distribution (43a, 44a) pour l'amenée d'air comprimé comme agent de pression et en ce que d'autres électrovannes (46, 47) sont placées dans la tête de commande (38), qui alimentent de l'air comprimé par des canaux intérieurs du boîtier (40, 40a, 40b) à la chambre de travail (39) de l'ensemble piston/cylindre agissant sur la position du manchon de commande (15)

18. Support selon l'une des revendications 1 à 17, caractérisé en ce que pour le mouvement en retour des tiroirs de distribution (43a , 44a) des soupapes de commande (43, 44) dans la tête de commande (38) de l'air comprimé à pression constante est amené sur les faces des tiroirs de distribution éloignées par rapport à la pression de commande.

# Fig.1

# Fig.2